# EUROPÄISCHE PATENTANMELDUNG

(11) **EP 4 538 505 A1**
(43) Veröffentlichungstag der Anmeldung: **16.04.2025**
(21) Anmeldenummer: 24204088.9
(22) Anmeldetag: 02.10.2024
(51) Int. Cl.: F01D 17/16, F01D 5/14

(54) **LEITSCHAUFELVERSTELLVORRICHTUNG UND STRÖMUNGSMASCHINE**

(30) Priorität: 11.10.2023 DE 102023127736
(71) Anmelder: MAN Energy Solutions SE, 86153 Augsburg (DE)
(72) Erfinder: Klausmann, Jan, 10405 Berlin (DE); Wegner, Hanno, 12529 Schönefeld /OT Großziethen (DE)

(57) **Zusammenfassung**

Leitschaufelverstellvorrichtung (17) für eine Strömungsmaschine, nämlich zur Verdrehung mehrerer zu einem Leitschaufelkranz (10) gruppierter Leitschaufeln (11) um sich in radialer Richtung erstreckende Drehachsen der Leitschaufeln des Leitschaufelkranzes, wobei jede Leitschaufel (11) jeweils einen vorderen Schaufelteil (13) und einen hinteren Schaufelteil (14) aufweist, die relativ zueinander verdrehbar sind. Mit einer ersten Antriebsnabe (18), die an einen ersten Antriebsmotor koppelbar ist und die über den ersten Antriebsmotor antreibbar ist, und mit einem ersten Steuerring (19), der eine Verdrehung der ersten Antriebsnabe (18) zur Verdrehung der vorderen Schaufelteile (13) der Leitschaufeln (11) des Leitschaufelkranzes (10) auf die vorderen Schaufelteile (13) überträgt. Mit einer zweiten Antriebsnabe (23), die an einen zweiten Antriebsmotor koppelbar ist und die über den zweiten Antriebsmotor antreibbar ist, und mit einen zweiten Steuerring (24), der eine Verdrehung der zweiten Antriebsnabe (23) zur Verdrehung der hinteren Schaufelteile (14) unabhängig von der Verdrehung der vorderen Schaufelteile (13) der Leitschaufeln (11) des Leitschaufelkranzes (10) auf die hinteren Schaufelteile (14) überträgt.

## Beschreibung

Die Erfindung betrifft eine Leitschaufelverstellvorrichtung für eine Strömungsmaschine und eine Strömungsmaschine mit einer Leitschaufelverstellvorrichtung.

Aus der Praxis bekannte Strömungsmaschinen verfügen über einen Rotor und einen Stator. Der Rotor einer Strömungsmaschine umfasst eine Welle sowie mehrere zusammen mit der Welle rotierende Laufschaufeln, wobei die Laufschaufeln zumindest einen Laufschaufelkranz ausbilden. Der Stator einer Strömungsmaschine umfasst ein Gehäuse sowie mehrere feststehende Leitschaufeln, wobei die Leitschaufeln mindestens einen Leitschaufelkranz ausbilden. Die aus der Praxis bekannten Leitschaufeln sind einteilig ausgeführt. Aus der Praxis ist es bekannt, die einteiligen Leitschaufeln eines Lautschaufelkranzes einer Strömungsmaschine über eine Leitschaufelverstellvorrichtung derart zu verstellen, dass die Leitschaufeln um eine sich in radialer Richtung des Rotors erstreckende Drehachse drehbar sind.

DE 10 2015 004 649 A1 offenbart eine Leitschaufelverstellvorrichtung zur Verdrehung von Leitschaufeln, die zweiteilig ausgeführt sind. So verfügt jede Leitschaufel über ein vorderes Schaufelteil und ein hinteres Schaufelteil, wobei die vorderen Schaufelteile und die hinteren Schaufelteile über einen gemeinsamen Steuerring gemeinsam verdreht und damit verstellt werden. Mit dem gemeinsamen Steuerring wirkt eine gemeinsame Antriebsnabe zusammen. Ausgehend von der gemeinsamen Antriebsnabe ist eine der Leitschaufeln des Leitschaufelkranzes direkt verstellbar, wobei die anderen Leitschaufeln des Leitschaufelkranzes ausgehend von der Antriebsnabe über den gemeinsamen Steuerring indirekt verstellbar sind.

Nach DE 10 2015 004 649 A1 können die beiden Schaufelteile einer jeden Laufschaufel infolge der gekoppelten Verlagerung derselben nur in Abhängigkeit eines von der Kopplungsmechanik abhängigen, festen Verstellgesetzes verdreht und damit verstellt werden. Es ist nicht möglich, den vorderen Schaufelteil und den hinteren Schaufelteil unabhängig voneinander zu verstellen. Hierdurch kann auch der Wirkungsgrad einer Strömungsmaschine nur im begrenzten Umfang gesteigert werden.

Hievon ausgehend liegt der Erfindung die Aufgabe zu Grunde, eine neuartige Leitschaufelverstellvorrichtung und eine Strömungsmaschine mit einer solchen Leitschaufelverstellvorrichtung zu schaffen.

Diese Aufgabe wird durch eine Leitschaufelverstellvorrichtung gemäß Anspruch 1 und durch eine Strömungsmaschine mit einer solchen Leitschaufelverstellvorrichtung gemäß Anspruch 10 gelöst.

Die erfindungsgemäße Leitschaufelverstellvorrichtung weist eine erste Antriebsnabe, die an einen ersten Antriebsmotor koppelbar und die über den ersten Antriebsmotor antreibbar ist, und einen ersten Steuerring, der zur Verdrehung der vorderen Schaufelteile der Leitschaufeln des Leitschaufelkranzes eine Verdrehung der ersten Antriebsnabe auf die vorderen Schaufelteile überträgt, auf.

Die erfindungsgemäße Leitschaufelverstellvorrichtung weist ferner eine zweite Antriebsnabe, die an einen zweiten Antriebsmotor koppelbar und die über den zweiten Antriebsmotor antreibbar ist, und einen zweiten Steuerring, der zur Verdrehung der hinteren Schaufelteile unabhängig von der Verdrehung der vorderen Schaufelteile der Leitschaufeln des Leitschaufelkranzes eine Verdrehung der zweiten Antriebsnabe auf die hinteren Schaufelteile überträgt, auf.

Bei der erfindungsgemäßen Leitschaufelverstellvorrichtung kommen zwei getrennte Antriebsnaben zum Einsatz, wobei jede der beiden getrennten Antriebsnaben mit jeweils einem Antriebsmotor koppelbar ist. Ferner verfügt die erfindungsgemäße Leitschaufelverstellvorrichtung über zwei getrennte Steuerringe. Die vorderen Schaufelteile der Leitschaufeln sind über den ersten Antriebsmotor, die erste Antriebsnabe und den ersten Steuerring verstellbar. Die hinteren Schaufelteile sind über den zweiten Antriebsmotor, die zweite Antriebsnabe und den zweiten Stellring unabhängig von der Verdrehung der vorderen Schaufelteile verstellbar, und zwar unabhängig von den vorderen Schaufelteile der Leitschaufeln.

Die beiden Schaufelteile können demnach unabhängig voneinander verstellt werden, sodass kein von eine Kopplungsmechanik abhängiges, festes Verstellgesetz mehr vorliegt.

Vorzugsweise ist der erste Steuerring an einer ersten axialen Seite des Leitschaufelkranzes, die den vorderen Schaufelteilen der Leitschaufeln zugewandt ist, und der zweite Steuerring an einer zweiten axialen Seite des Leitschaufelkranzes, die den hinteren Schaufelteilen der Leitschaufeln zugewandt ist, angeordnet. Dies ist für eine einfache, unabhängige Verlagerung des vorderen Schaufelteils und des hinteren Schaufelteils der Leitschaufeln bevorzugt.

Vorzugsweise ist die erste Antriebsnabe mit einer der vorderen Schaufelteile einer der Leitschaufeln des Leitschaufelkranzes direkt gekoppelt, derart, dass das vordere Schaufelteile dieser Leitschaufel des Leitschaufelkranzes ausgehend von der ersten Antriebsnabe ohne Zwischenschaltung des ersten Steuerrings direkt verdrehbar ist. Die erste Antriebsnabe ist mit den vorderen Schaufelteilen der anderen Leitschaufeln des Leitschaufelkranzes indirekt gekoppelt, derart, dass die vorderen Schaufelteile der anderen Leitschaufeln des Leitschaufelkranzes ausgehend von der erste Antriebsnabe unter Zwischenschaltung des ersten Steuerrings indirekt verdrehbar sind.

Vorzugsweise ist die zweite Antriebsnabe mit einer der hinteren Schaufelteile einer der Leitschaufeln des Leitschaufelkranzes direkt gekoppelt, derart, dass das hintere Schaufelteil dieser Leitschaufel des Leitschaufelkranzes ausgehend von der zweiten Antriebsnabe ohne Zwischenschaltung des zweiten Steuerrings direkt verdrehbar ist. Die zweite Antriebsnabe ist mit den hinteren Schaufelteilen der anderen Leitschaufeln des Leitschaufelkranzes indirekt gekoppelt, derart, dass die hinteren Schaufelteile der anderen Leitschaufeln des Leitschaufelkranzes ausgehend von der zweiten Antriebsnabe unter Zwischenschaltung des zweiten Steuerrings indirekt verdrehbar sind.

Vorzugsweise ist die erste Antriebsnabe mit dem ersten Steuerring über einen ersten Antriebshebel und die zweite Antriebsnabe mit dem zweiten Steuerring über einen zweiten Antriebshebel gekoppelt, wobei die erste Antriebsnabe zusammen mit dem ersten Antriebshebel an einer ersten Umfangsposition und die zweite Antriebsnabe zusammen mit dem zweiten Antriebshebel an einer zweiten, anderen Umfangsposition des Leitschaufelkranzes angeordnet sind. Über die Antriebshebel kann die Aktuierung an der jeweiligen Antriebsnabe auf den jeweiligen Steuerring übertragen werden.

Vorzugsweise ist der erste Steuerring der Leitschaufelverstellvorrichtung über jeweils einen ersten Schaufelhebel mit einem Lagerzapfen des vorderen Schaufelteils einer jeweils anderen, indirekt verdrehbaren Leitschaufel gekoppelt, wobei der zweite Steuerring der Leitschaufelverstellvorrichtung über jeweils einen zweiten Schaufelhebel mit einem Lagerzapfen des hinteren Schaufelteils einer jeweils anderen, indirekt verdrehbaren Leitschaufel gekoppelt ist. Über den jeweiligen Schaufelhebel der Leitschaufelverstellvorrichtung erfolgt die Übertragung der von der jeweiligen Antriebsnabe ausgehenden Aktuierung vom jeweiligen Steuerring auf die jeweils anderen, indirekt verdrehbaren Leitschaufeln des Leitschaufelkranzes.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen perspektivischen Ausschnitt aus einer Strömungsmaschine im Bereich eines Leitschaufelkranzes und einer Leitschaufelverstellvorrichtung für mehrteilige Leitschaufeln des Leitschaufelkranzes;
- Fig. 2: ein Detail der Fig. 1;
- Fig. 3: einen Querschnitt durch das Detail der Fig. 2 im Bereich einer ersten Antriebsnabe;

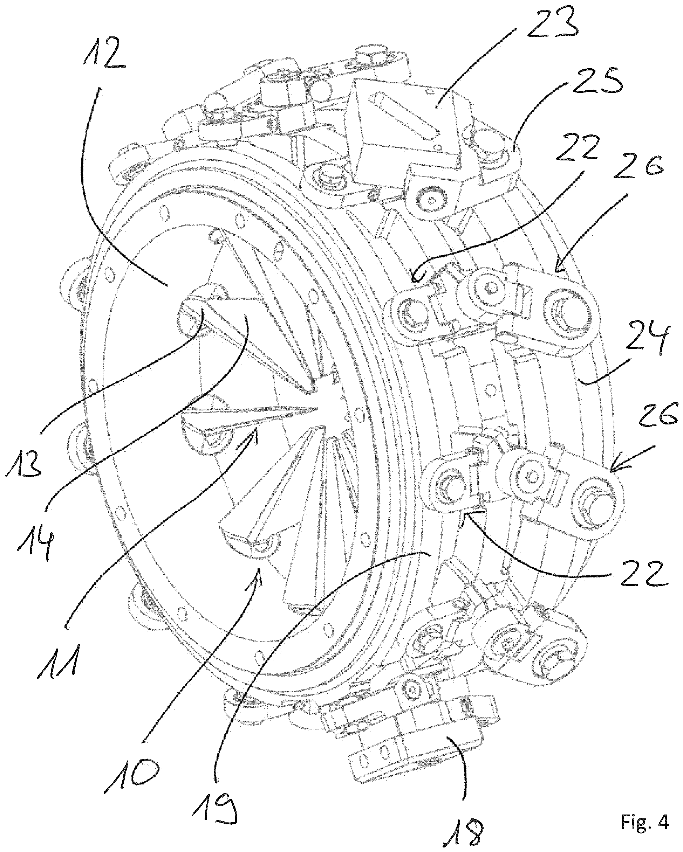

- Fig. 4: den Ausschnitt der Fig. 1 in Umfangsrichtung gedreht,
- Fig. 5: ein Detail der Fig. 4;
- Fig. 6: einen Querschnitt durch das Detail der Fig. 5 im Bereich einer zweiten Antriebsnabe;
- Fig. 7: ein Detail der Fig. 1, 4;
- Fig. 8: einen Querschnitt durch das Detail der Fig. 7 im Bereich eines zweiten Schaufelhebels der Leitschaufelverstellvorrichtung;
- Fig. 9: einen Querschnitt durch das Detail der Fig. 7 im Bereich eines ersten Schaufelhebels der Leitschaufelverstellvorrichtung.

Der grundsätzliche Aufbau einer Strömungsmaschine ist dem hier angesprochenen Fachmann geläufig. Es sei an dieser Stelle der Vollständigkeit halber ausgeführt, dass eine Strömungsmaschine einen Rotor mit rotorseitigen Laufschaufeln und einen Stator mit statorseitigen Leitschaufeln umfasst. Die Laufschaufeln des Rotors bilden mindestens einen Laufschaufelkranz, wobei der oder jeder Laufschaufelkranz zusammen mit einer Welle des Rotors rotiert. Die Leitschaufeln des Stators bilden mindestens einen Leitschaufelkranz, der an einem statorseitigen Gehäuse angebunden ist.

Die hier vorliegende Erfindung betrifft eine Leitschaufelverstellvorrichtung für die Leitschaufeln des Stators einer Strömungsmaschine und eine Strömungsmaschine mit mindestens einer solchen Leitschaufelverstellvorrichtung.

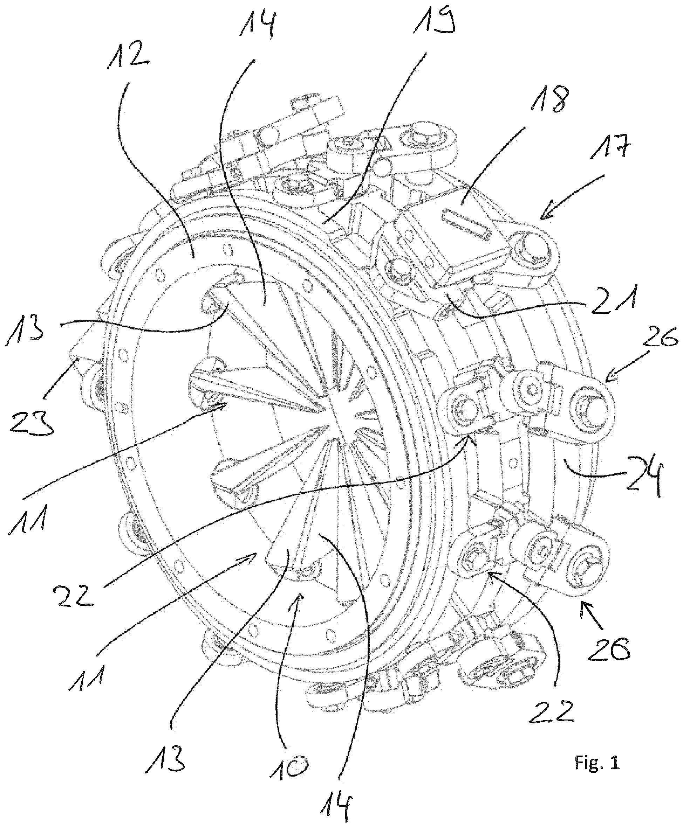

Fig. 1 zeigt einen perspektivischen Ausschnitt aus einer Strömungsmaschine, nämlich eine perspektivische Ansicht eines sogenannten Eintrittsleitapparats einer Strömungsmaschine, mithilfe dessen die Strömung eines Prozessgases vor Eintritt in ein Laufrad gezielt beeinflusst werden kann.

Der in Fig. 1 gezeigte Eintrittsleitapparat verfügt über einen Leitschaufelkranz 10 aus mehreren Leitschaufeln 11, die ausgehend von einem einen Strömungskanal definierenden Gehäuse 12 nach innen in den Strömungskanal hineinragen. Jede Leitschaufel 11 ist mehrteilig aus einem vorderen Schaufelteil 13 und einem hinteren Schaufelteil 14 ausgebildet. Jedes der Schaufelteile 13, 14 einer jeden Leitschaufel 11 verfügt über einen Lagerzapfen 15, 16, wobei im gezeigten Ausführungsbeispiel der Lagerzapfen 15 für das vordere Schaufelteil 13 als Hohlzapfen und der Lagerzapfen 16 für das hintere Schaufelteil 14 als Vollzapfen ausgebildet ist. Die Lagerzapfen 15, 16 einer jeden mehrteiligen Leitschaufel 11 verlaufen in radialer Richtung koaxial zueinander, sodass demnach in radialer Richtung verlaufende Drehachsen der Lagerzapfen 15, 16 der Schaufelteile 13, 14 im Bereich jeder Leitschaufel 11 zusammenfallen. Im Bereich jeder Leitschaufel 11 sind demnach die beiden Schaufelteile 13, 14 um eine gemeinsame Drehachse relativ zum Gehäuse 12 drehbar, wobei sich diese Drehachse in Radialrichtung erstreckt und durch die koaxialen Achsen der beiden Lagerzapfen 15, 16 definiert ist.

Um die vorderen und hinteren Schaufelteile 13, 14 der Leitschaufeln 11 zu verdrehen und damit zu verlagern, wirkt mit dem Leitschaufelkranz 10 eine Leitschaufelverstellvorrichtung 17 zusammen.

Die Leitschaufelverstellvorrichtung 17 weist eine erste Antriebsnabe 18 auf, die an einen nicht gezeigten ersten Antriebsmotor koppelbar ist und die über den ersten Antriebsmotor antreibbar ist. Mit dieser ersten Antriebsnabe 18 wirkt ein erster Steuerring 19 zusammen, der eine Verdrehung der ersten Antriebsnabe 18 zur Verdrehung der vorderen Schaufelteile 13 der Leitschaufeln 11 des Leitschaufelkranzes 10 auf die vorderen Schaufelteile 13 überträgt.

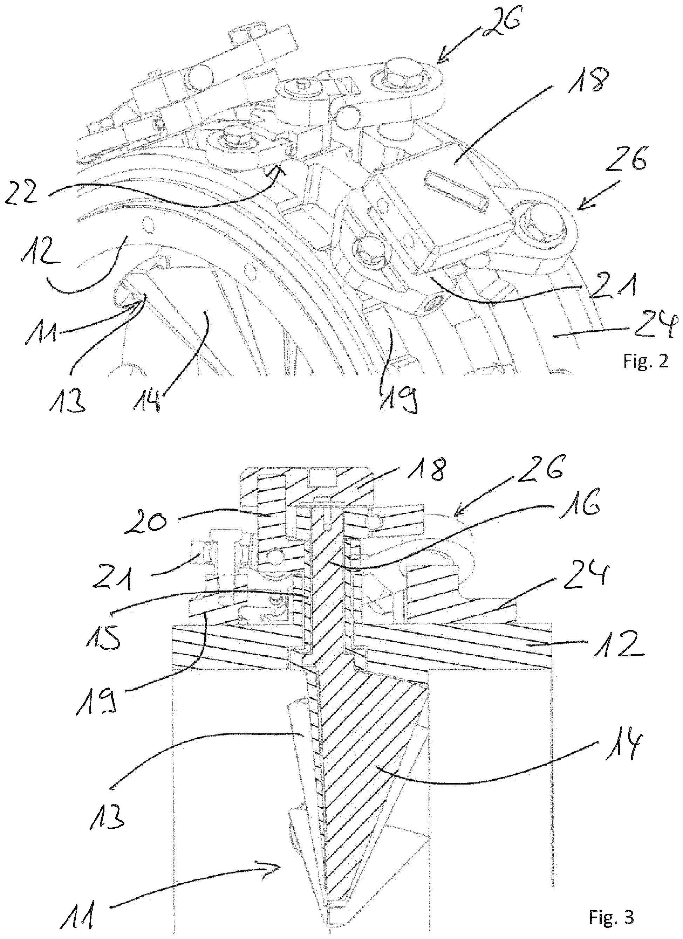

Die erste Antriebsnabe 18 ist mit einer der vorderen Schaufelteile 13 einer der Leitschaufeln 11 des Leitschaufelkranzes 10 direkt gekoppelt, und zwar derart, dass dieses vordere Schaufelteil 13 dieser Leitschaufel 11 des Leitschaufelkranzes 10 ausgehend von der ersten Antriebsnabe 18 ohne Zwischenschaltung des ersten Steuerrings 19 direkt verdrehbar ist. So zeigt Fig. 3, dass die erste Antriebsnabe 18, nämlich ein mit der ersten Antriebsnabe 18 verbundenes Zwischenstück 20, ohne Zwischenschaltung des ersten Steuerrings 19 mit dem Lagerzapfen 15 des vorderen Schaufelteils 13 der dort gezeigten Leitschaufel 11 gekoppelt ist. Demnach kann diese Leitschaufel 11 ausgehend von der ersten Antriebsnabe 18 direkt verdreht und damit verlagert werden.

Die erste Antriebsnabe 18 ist mit den vorderen Schaufelteilen 13 der anderen Leitschaufeln 11 des Leitschaufelkranzes 10 indirekt gekoppelt, und zwar derart, dass die vorderen Schaufelteile 13 der anderen Leitschaufeln 11 des Leitschaufelkranzes 10 ausgehend von der ersten Antriebsnabe 18 unter Zwischenschaltung des ersten Steuerrings 19 indirekt verdrehbar sind. So ist die erste Antriebsnabe 18 mit dem ersten Steuerring 19 über einen ersten Antriebshebel 21 gekoppelt, um über den ersten Antriebshebel 21 eine Aktuierung der ersten Antriebsnabe 18 auf den ersten Steuerring 19 zu übertragen. Der erste Steuerring 19 ist über jeweils einen ersten Schaufelhebel 22 mit dem Lagerzapfen 15 des vorderen Schaufelteils 13 einer jeweils anderen, indirekt über den ersten Steuerring 19 verdrehbaren Leitschaufel 11 des Leitschaufelkranzes 10 gekoppelt.

Eine Verdrehung der ersten Antriebsnabe 18 bewirkt demnach eine direkte Verdrehung des vorderen Schaufelteils 13 einer einzigen Leitschaufel 11, ebenso eine Verdrehung des ersten Steuerrings 19 und über den ersten Steuerring 19 eine Verdrehung der ersten Schaufelteile 13 aller anderen Leitschaufeln 11.

Die Leitschaufelverstellvorrichtung 17 weist ferner eine zweite Antriebsnabe 23 auf, die an einen zweiten, ebenfalls nicht gezeigten Antriebsmotor gekoppelt ist und die über den zweiten Antriebsmotor antreibbar ist. Mit der zweiten Antriebsnabe 23 wirkt ein zweiter Steuerring 24 zusammen. Der zweite Steuerring 24 überträgt eine Verdrehung der zweiten Antriebsnabe 23 zur Verdrehung der hinteren Schaufelteile 14 unabhängig von der Verdrehung der vorderen Schaufelteile 13 der Leitschaufeln 11 des Leitschaufelkranzes 10 auf die hinteren Schaufelteile 14 der Leitschaufeln 11.

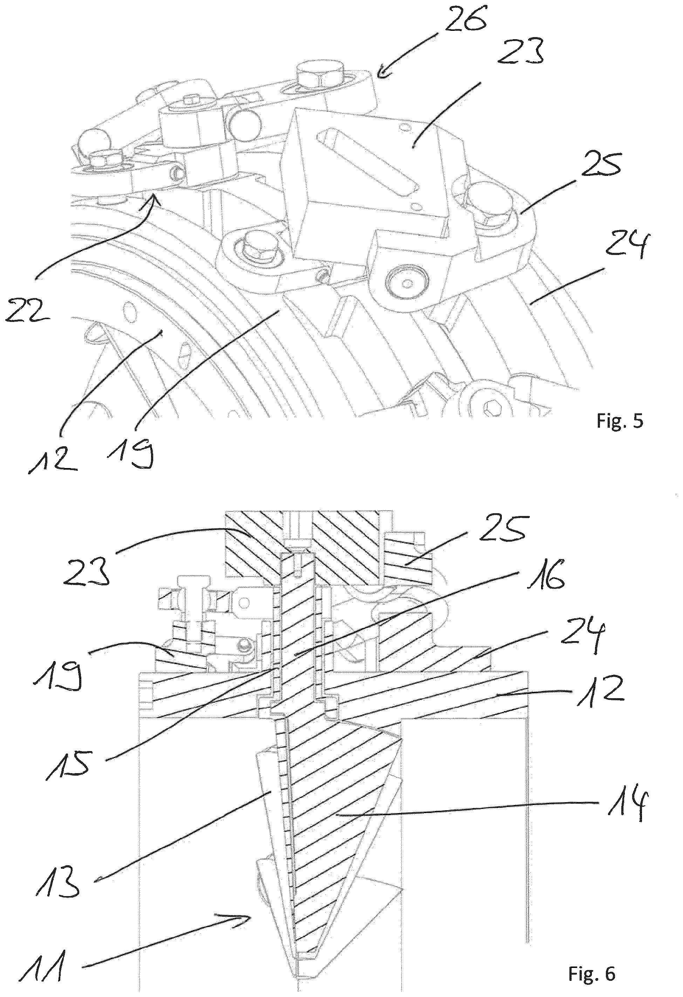

Analog zur ersten Antriebsnabe 18 ist die zweite Antriebsnabe 19 mit einer der hinteren Schaufelteile 14 einer der Leitschaufeln 11 des Leitschaufelkranzes 10 direkt gekoppelt, und zwar derart, dass das hintere Schaufelteil 14 dieser Leitschaufel 11 ausgehend von der zweiten Antriebsnabe 23 ohne Zwischenschaltung des zweiten Steuerrings 24 direkt verdrehbar ist. So zeigt Fig. 5, dass die zweite Antriebsnabe 23 direkt an dem Lagerzapfen 16 des hinteren Schaufelteils 14 der in Fig. 5 gezeigten Leitschaufel 11 angreift. Die zweite Antriebsnabe 23 ist mit den hinteren Schaufelteilen 14 der anderen Leitschaufeln 11 des Leitschaufelkranzes 10 indirekt gekoppelt, und zwar derart, dass die hinteren Schaufelteile 14 der anderen Leitschaufeln 11 des Leitschaufelkranzes 10 ausgehend von der zweiten Antriebsnabe 23 unter Zwischenschaltung des zweiten Steuerrings 24 indirekt verdrehbar sind. Hierzu ist die zweite Antriebsnabe 23 mit dem zweiten Steuerring 24 über einen zweiten Antriebshebel 25 gekoppelt, sodass eine Verdrehung der zweiten Antriebsnabe 23 eine Verdrehung des zweiten Steuerrings 24 bewirkt. Der zweite Steuerring 24 ist dann über einen jeweils zweiten Schaufelhebel 26 mit einem jeweiligen Lagerzapfen 16 des hinteren Schaufelteils 14 einer jeweils anderen Leitschaufel 11 gekoppelt.

Die Aktuierung bzw. Verdrehung der zweiten Antriebsnabe 23 bewirkt demnach die direkte Verdrehung eines hinteren Schaufelteils 14 einer einzigen Leitschaufel 11. Die Verdrehung der anderen hinteren Schaufelteile 14 der anderen Leitschaufeln 11 erfolgt unter Zwischenschaltung des zweiten Steuerrings 24.

Wie am besten Fig. 6 bis 8 entnommen werden kann, ist jeder der ersten Schaufelhebel 22 aus zwei Hebelabschnitten 22a, 22b und jeder der zweiten Schaufelhebel 26 aus zwei Hebelabschnitten 26a, 26b zusammengesetzt.

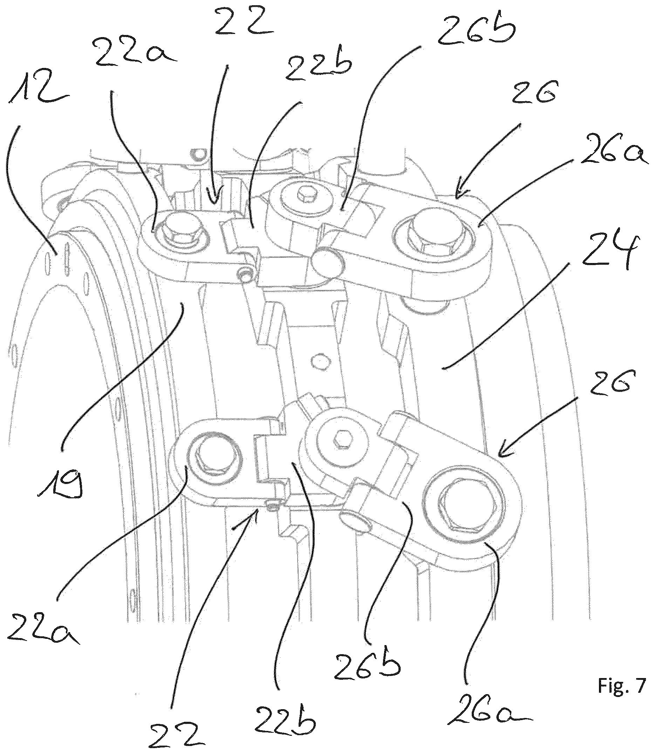

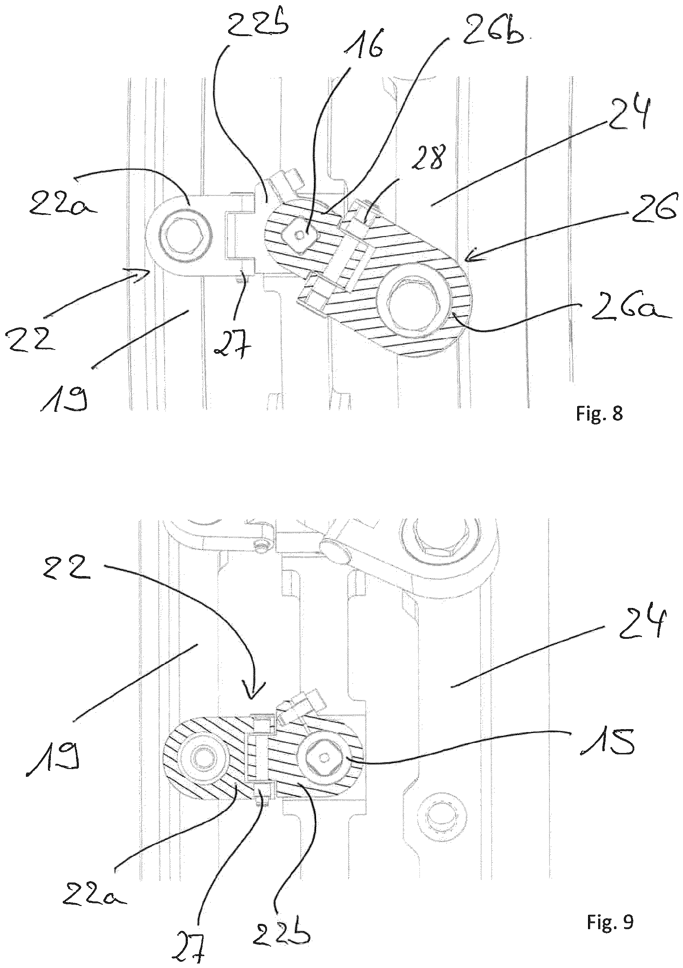

Ein erster dieser Hebelabschnitte, nämlich die ersten Hebelabschnitte 22a, 26a, eines jeden Schaufelhebels 22, 26 greift am jeweiligen Steuerring 19, 24 an. Ein zweiter dieser Hebelabschnitte, nämlich die zweiten Hebelabschnitte 22b, 26b, eines jeden Schaufelhebels 22, 26 greift am jeweiligen Lagerzapfen 16, 15 an. Die jeweiligen ersten Hebelabschnitte 22a, 26a greifen gelenkig am jeweiligen zweiten Hebelabschnitt 22b, 26b des jeweiligen Schaufelhebels 22, 26 an. Fig. 7 zeigt die feste bzw. nicht-gelenkige Kopplung des zweiten Hebelabschnitts 26b eines zweiten Schaufelhebels 26 mit dem Lagerzapfen 16 eines hinteren Schaufelteils 14. Fig. 8 zeigt die feste bzw. nicht-gelenkige Kopplung des zweiten Hebelabschnitts 22b eines ersten Schaufelhebels 22 mit dem Lagerzapfen 15 eines vorderen Schaufelteils 13 einer Leitschaufel 11. Ferner zeigen Fig. 7, 8 Gelenke 27, 28 zwischen den ersten Hebelabschnitten 22a, 26a und dem jeweiligen zweiten Hebelabschnitt 22b, 26b des jeweiligen Schaufelhebels 22. Die ersten Hebelabschnitte 22a, 26a, der Schaufelhebel 22, 26 greifen vorzugsweise gelenkig am jeweiligen Steuerring 19, 24 an.

Die erste Antriebsnabe 18 ist zusammen mit dem ersten Antriebshebel 21 an einer ersten Umfangsposition des Leitschaufelkranzes 10 und damit der Leitschaufelverstellvorrichtung 17 angeordnet, die zweite Antriebsnabe 23 ist mit dem zweiten Antriebshebel 25 an einer zweiten unterschiedlichen Umfangsposition angeordnet.

In Axialrichtung des Leitschaufelkranzes 10 gesehen ist der erste Steuerring 19 an einer ersten axialen Seite des Leitschaufelkranzes 10, die den vorderen Schaufelteilen 13 zugewandt ist, und der zweite Steuerring 24 an einer zweiten axialen Seite des Leitschaufelkranzes 10, die den hinteren Schaufelteilen 14 der Leitschaufeln 11 zugewandt ist, angeordnet.

Die erfindungsgemäße Leitschaufelverstellvorrichtung 17 zur Verstellung von mehrteilligen Leitschaufeln 11, die jeweils ein vorderes Schaufelteil 13 und ein hinteres Schaufelteil 14 aufweisen, nutzt demnach zwei Antriebsnaben 18, 23 und zwei Steuerringe 19, 24. Die vorderen Schaufelteile 13 können unabhängig von den hinteren Schaufelteilen 14 verdreht werden. Zwischen der Verstellung der vorderen Schaufelteile 13 und der hinteren Schaufelteile 14 besteht demnach kein festes, durch eine Koppelmechanik vorgegebenes Verstellgesetz. Vielmehr kann die Verstellung zwischen den Schaufelteilen 13, 14 frei gewählt werden über die individuelle Aktuierung der Verstellung ausgehend von den getrennten Antriebsnaben 18, 19 über die getrennten Steuerringe 19, 24.

## Patentansprüche

1. Leitschaufelverstellvorrichtung (17) für eine Strömungsmaschine, nämlich zur Verdrehung mehrerer zu einem Leitschaufelkranz (10) gruppierter Leitschaufeln (11) um sich in radialer Richtung erstreckende Drehachsen der Leitschaufeln (11) des Leitschaufelkranzes (10), wobei jede Leitschaufel (11) jeweils einen vorderen Schaufelteil (13) und einen hinteren Schaufelteil (14) aufweist, die relativ zueinander verdrehbar sind, **gekennzeichnet durch**
eine erste Antriebsnabe (18), die an einen ersten Antriebsmotor koppelbar und die über den ersten Antriebsmotor antreibbar ist, und einen ersten Steuerring (19), der eine Verdrehung der ersten Antriebsnabe (18) zur Verdrehung der vorderen Schaufelteile (13) der Leitschaufeln (11) des Leitschaufelkranzes (10) auf die vorderen Schaufelteile (13) überträgt,
eine zweite Antriebsnabe (23), die an einen zweiten Antriebsmotor koppelbar und die über den zweiten Antriebsmotor antreibbar ist, und einen zweiten Steuerring (24), der eine Verdrehung der zweiten Antriebsnabe (23) zur Verdrehung der hinteren Schaufelteile (14) unabhängig von der Verdrehung der vorderen Schaufelteile (13) der Leitschaufeln (11) des Leitschaufelkranzes (10) auf die hinteren Schaufelteile (14) überträgt.

2. Leitschaufelverstellvorrichtung (17) nach Anspruch 1, wobei
die erste Antriebsnabe (18) mit einer der vorderen Schaufelteile (13) einer der Leitschaufeln (11) des Leitschaufelkranzes (10) direkt gekoppelt ist, derart, dass das vordere Schaufelteil (13) dieser Leitschaufel (11) des Leitschaufelkranzes (10) ausgehend von der ersten Antriebsnabe (18) ohne Zwischenschaltung des ersten Steuerrings (19) direkt verdrehbar ist,
die erste Antriebsnabe (18) mit den vorderen Schaufelteilen (13) der anderen Leitschaufeln (11) des Leitschaufelkranzes (10) indirekt gekoppelt ist, derart, dass die vorderen Schaufelteile (13) der anderen Leitschaufeln (11) des Leitschaufelkranzes (10) ausgehend von der erste Antriebsnabe unter Zwischenschaltung des ersten Steuerrings (19) indirekt verdrehbar sind.

3. Leitschaufelverstellvorrichtung (17) nach Anspruch 1 oder 2, wobei
die zweite Antriebsnabe (23) mit einer der hinteren Schaufelteile (14) einer der Leitschaufeln (11) des Leitschaufelkranzes (10) direkt gekoppelt ist, derart, dass das hintere Schaufelteil (14) dieser Leitschaufel (11) des Leitschaufelkranzes (10) ausgehend von der zweiten Antriebsnabe (23) ohne Zwischenschaltung des zweiten Steuerrings (24) direkt verdrehbar ist,
die zweite Antriebsnabe (23) mit den hinteren Schaufelteilen (14) der anderen Leitschaufeln (11) des Leitschaufelkranzes (10) indirekt gekoppelt ist, derart, dass die hinteren Schaufelteile (14) der anderen Leitschaufeln (11) des Leitschaufelkranzes (10) ausgehend von der zweiten Antriebsnabe unter Zwischenschaltung des zweiten Steuerrings (24) indirekt verdrehbar sind.

4. Leitschaufelverstellvorrichtung (17) nach einem der Ansprüche 1 bis 3, wobei
der erste Steuerring (19) über jeweils einen ersten Schaufelhebel (22) mit einem Lagerzapfen (15) des vorderen Schaufelteils (13) einer jeweils anderen Leitschaufel gekoppelt ist,
der zweite Steuerring (24) über jeweils einen zweiten Schaufelhebel (26) mit einem Lagerzapfen (16) des hinteren Schaufelteils (14) einer jeweils anderen Leitschaufel gekoppelt ist.

5. Leitschaufelverstellvorrichtung (17) nach Anspruch 4, wobei
im Bereich jeder Leitschaufel (11) einer der Lagerzapfen (16) von vorderem und hinterem Schaufelteil (13, 14) als Vollzapfen und der andere der Lagerzapfen (15) von vorderem und hinterem Schaufelteil (13, 14) als Hohlzapfen ausgebildet ist, deren Drehachsen in radialer Richtung koaxial verlaufen.

6. Leitschaufelverstellvorrichtung (17) nach Anspruch 4 oder 5, wobei
der jeweilige erste Schaufelhebel (22) und der jeweilige zweite Schaufelhebel (26) jeweils zwei Hebelabschnitte (22a, 22b, 26a, 26b) aufweisen, nämlich einen an dem jeweiligen Lagerzapfen (15, 16) des jeweiligen Schaufelteils (13, 14) angreifenden Hebelabschnitt (22b, 26b) und einen an dem jeweiligen Steuerring (19, 24) angreifenden Hebelabschnitt (22a, 26a), wobei die beiden Hebelabschnitte (22a, 22b, 26a, 26b) des jeweiligen Schaufelhebels (22, 26) untereinander gelenkig verbunden sind.

7. Leitschaufelverstellvorrichtung (17) nach einem der Ansprüche 1 bis 6, wobei
die erste Antriebsnabe (18) mit dem ersten Steuerring (19) über einen ersten Antriebshebel (21) gekoppelt ist,
die zweite Antriebsnabe (23) mit dem zweiten Steuerring (24) über einen zweiten Antriebshebel (25) gekoppelt ist.

8. Leitschaufelverstellvorrichtung (17) nach Anspruch 7, wobei
die erste Antriebsnabe (18) zusammen mit dem ersten Antriebshebel (21) an einer ersten Umfangsposition und die zweite Antriebsnabe (23) zusammen mit dem zweiten Antriebshebel (25) an einer zweiten, anderen Umfangsposition des Leitschaufelkranzes (11) angeordnet sind.

9. Leitschaufelverstellvorrichtung (17) nach einem der Ansprüche 1 bis 8, wobei
der erste Steuerring (19) an einer ersten axialen Seite des Leitschaufelkranzes (11), die den vorderen Schaufelteilen (13) der Leitschaufeln zugewandt ist, und der zweite Steuerring (24) an einer zweiten axialen Seite des Leitschaufelkranzes (11), die den hinteren Schaufelteilen (14) der Leitschaufeln zugewandt ist, angeordnet ist.

10. Strömungsmaschine, mit einem Laufschaufeln aufweisenden Rotor und mit einem Leitschaufeln aufweisenden Stator, wobei die Leitschaufeln mindestens einen Leitschaufelkranz (10) bilden, und wobei mindestens die Leitschaufeln mindestens eines Leitschaufelkranzes (10) durch eine Leitschaufelverstellvorrichtung (17) verstellbar sind wobei die Leitschaufelverstellvorrichtung (17) nach einem der Ansprüche 1 bis 9 ausgebildet ist.
